Europäisches Patentamt

European Patent Office

Office européen des brevets

(19)

(11) Publication number: **0 373 837**
**A2**

## (12) EUROPEAN PATENT APPLICATION

(21) Application number: **89312838.9**

(22) Date of filing: **08.12.89**

(51) Int. Cl.⁵: **A01N 25/10, A01C 1/06**

(30) Priority: **10.12.88 GB 8828902**

(43) Date of publication of application:
**20.06.90 Bulletin 90/25**

(84) Designated Contracting States:
**AT BE CH DE ES FR GB GR IT LI LU NL SE**

(71) Applicant: **SEMPERNOVA PLC**
**106 London Road**
**Reading, Berkshire RG1 4SJ(GB)**

(72) Inventor: **Beechey, William John**
**Glenwood 20 Lowther Road**
**Wokingham Berkshire RG11 1JP(GB)**
Inventor: **James, Kenneth**
**Meadow Croft Farnborough**
**Nr. Wantage Oxfordshire OX12 8NT(GB)**

(74) Representative: **Sheader, Brian N. et al**
**ERIC POTTER & CLARKSON 27 South Street**
**Reading Berkshire, RG1 4QU(GB)**

(54) Preparation for improving properties of chemical products.

(57) A preparation is provided for improving particular properties of selected chemical products, such as the coating properties of seed dressings or the prevention or reduction of separation, sedimentation or claying in chemical products used in agriculture or horticulture, such as agricultural or horticultural sprays. The preparation is in liquid or powder form and comprises, by weight percent, as a liquid 0.2 to 5.0 of at least one water soluble sucrose ester, 0.1 to 15 of at least one polysaccharide and balance water, or, as a powder, 2 to 25 of at least one water soluble sucrose ester, 2 to 65 of at least one polysaccharide and balance inert filler.

EP 0 373 837 A2

## PREPARATION FOR IMPROVING PROPERTIES OF CHEMICAL PRODUCTS

This invention relates to a preparation for improving particular properties of selected chemical products used in agriculture or horticulture.

Many chemical solutions for use in agriculture or horticulture, such as seed dressings for dressing seeds, tubers, bulbs, corms or the like, or crop sprays, and comprising fungicides, herbicides, pesticides and/or insecticides, are subject to separation and sedimentation which makes it difficult to control dosage rates and can affect spraying equipment and the like or to solidification or "claying" which makes them impossible to use. A problem is also encountered with seed dressings since most dressing preparations, e.g., containing fungicides, pesticides and/or insecticides, do not adhere well to seeds, bulbs, tubers, corms and the like and tend to form poor uneven coatings thereon. Likewise many crop sprays do not properly set and/or adhere to vegatitive surfaces.

The present invention has as its object to provide a preparation which will act as a setting agent, stabiliser or suspending agent in chemical solutions for agricultural or horticultural use to improve the wetting or coating properties thereof or to prevent or reduce separation and sedimentation therein or claying thereof or which can be added to seed dressings to improve the coating properties thereof. The invention also has as its object to provide a preparation as aforesaid which can be non-toxic, bio-degradeable and which can be produced from food-grade ingredients so that it is safe for use on food crops.

The present invention provides a preparation for improving particular properties of selected chemical products used in agriculture and horticulture, the preparation being in liquid or powder form and essentially comprising, by weight percent, as a liquid 0.2 to 5.0 of at least one water soluble sucrose ester, 0.1 to 15 of at least one polysaccharide and balance water, or as a powder 2.0 to 25 of at least one water soluble sucrose ester, 2 to 65 of at least one polysaccharide and balance inert filler.

Unsaturated sucrose mono esters and some lower saturated sucrose esters, such as $C^{12}$ saturated sucrose ester, are soluble in water. The higher unsaturated and saturated sucrose esters, such as the unsaturated di-, tri- and poly-esters are not themselves generally soluble in water but can be carried into solution with water soluble sucrose esters. Commercially available sucrose esters, such as unsaturated sucrose mono esters, generally contain as part of the ester linkage some higher esters, e.g., unsaturated di, tri- and poly-esters as well as other fatty acids such as palmitate and stearate. Thus the term "at least one water soluble sucrose ester" as used herein and in the claims hereof means any sucrose ester or combination of sucrose esters, whether saturated or unsaturated, which is water soluble or will be carried into solution with other sucrose esters and whether or not it contains a minor proportion of other fatty acids as part of the ester linkage.

Said at least one polysaccharide may be selected from the group comprising sodium carboxymethyl cellulose, alginate, xanthan gum and guar gum, although other polysaccharides, preferably used in the food industry, may be used if desired.

Said inert filler may be any suitable filler material used in powder preparations and is preferably water soluble. A particularly suitable filler is lactose.

According to an embodiment of the invention, the preparation comprises, by weight percent, as a liquid 0.2 to 4.0 unsaturated sucrose mono ester, 0.05 to 1.0 unsaturated sucrose di-, tri- and/or poly- ester, 1 to 15 sodium carboxymethyl cellulose and/or alginate or 0.1 to 3.0 xanthan gum and/or guar gum and balance water, or as a powder 2 to 20 unsaturated sucrose mono ester, 0.5 to 5.0 unsaturated di-, tri- and/or poly-ester, 40 to 65 sodium carboxymethyl cellulose and/or alginate or 2 to 30 xanthan gum and/or guar gum and balance lactose.

A preferred liquid preparation according to the present invention comprises, by weight percent, 0.5 to 2.0 unsaturated sucrose mono ester, 0.1 to 0.5 unsaturated sucrose di-, tri- and/or poly- ester, 3 to 10 sodium carboxymethyl cellulose and/or alginate or 0.5 to 2.0 xanthan gum or guar gum and balance water. An example of a particularly preferred liquid preparation according to the present invention comprises, in weight percent, 0.8 unsaturated sucrose mono ester and 0.2 unsaturated sucrose di-, tri- and/or poly- ester with either 5.0 sodium carboxymethyl cellulose or alginate and 94 water or 1.5 xanthan gum or guar gum and 97.5 water.

A preferred powder preparation according to the present invention comprises, by weight percent, 5 to 12 unsaturated sucrose mono ester, 1 to 4 unsaturated sucrose di-, tri- and/or poly-ester, 45 to 60 sodium carboxymethyl cellulose and/or alginate or 10 to 20 xanthan gum or guar gum and balance lactose. A particularly preferred powder preparation according to the invention comprises, by weight percent, 8.64 unsaturated sucrose mono ester and 2.16 unsaturated sucrose di, tri- and/or poly- ester with either 54.1 sodium carboxymethyl cellulose or alginate and 35.1 lactose or 16.2 xanthan gum or guar gum and 73.0 lactose.

The preparation of the present invention is particularly useful in seed dressings for improving coating properties thereof. Typical seed dressings to which the preparation of the present invention can be added to provided a seed dressing according to the invention are fungicides such as those comprising Triadimenol and Fuberidazole for use on cereal seeds such as wheat, barley and oats or Thiram for use on sugar beet and red beet, pesticides such as those containing Thiram for use on peas and beans and those containing Fosetyl-A1, Thiabendazole and Captan or insecticides such as those containing Fonofos for use on wheat and barley. Thus, a seed dressing as aforesaid may have added thereto, by weight, 0.2 to 50%, preferably 1 to 5%, of a liquid preparation according to the present invention or 0.05 to 35%, preferably 01. to 5%, of a powder preparation according to the present invention.

Improving the coating properties of seed dressings by adding thereto a preparation according to the present invention not only facilitates the coating operation but also improves the appearance of the coated seeds and increases the efficacy of the active ingredient of the fungicide, pesticide and/or insecticide contained in the seed dressing because of the more even distribution thereof over the seed surfaces.

The preparation of the present invention is also particularly useful in chemical solutions used in agriculture and horticulture, such as agricultural or horticultural sprays, e.g., containing fungicides, pesticides, insecticides and/or herbicides for improving the wetting properties or adherence to vegitative surfaces and/or for preventing or reducing separation, sedimentation or claying thereof. Typical of the agricultural or horticultural chemical solutions with which the preparation of the present invention is useful are fungicides such as those comprising Benlate or Thiram. Thus, for example, a crop spray according to the present invention may comprise, by weight, 0.2 to 50%, preferably 1 to 5% of a liquid preparation according to the present invention or 0.05% to 35%, preferably 0.1 to 5%, of a powder preparation according to the present invention.

The following specific Examples are given by way of illustration.

## EXAMPLE 1

A liquid preparation according to the present invention was prepared comprising, in weight percent:

| | |
|---|---|
| Unsaturated sucrose Mono esters | 0.8 |
| Unsaturated sucrose di-, tri- or poly-esters | 0.2 |
| Sodium carboxymethyl cellulose | 5.00 |
| Water | 94.00 |

The liquid preparation was mixed with Thiram 60 at three concentrations, namely 1% v/v, 2.5% v/v and 5% v/v. The method of mixing was by shaking in a sealed container with space to allow for agitation. One noticeable effect of the mixtures was an improvement in the formulation of the Thiram 60.

The three formulations of Thiram 60 were then applied to a range of seeds at a high rate to assess any retention improvement of chemical on the seed.

## Methods

The seed used was Maris Bead field beans, winter barley and a black seeded wheat of Australian origin. The field beans were chosen because they are very smooth-coated and do not retain chemical easily

100 gms. of seed were placed in a small plastics bucket, 1 ml. of Thiram 60 formulation added providing a dosage of 10 l. per tonne of seed. The bucket was then moved around rapidly so that the seed had a similar movement to that in a commercial seed treater. This provided good coverage of the seed but drying was necessary because of the excessive application. The standard rate is 1.75 l. per tonne for beans and 2.5 l. per tonne for cereals.

## Visual Results

It was possible to see visually that the seed coverage was best with the Thiram 60 + 1% liquid preparation. Thiram 60 + 2.5% liquid preparation was almost as good. Thiram 60 + 5% liquid preparation was blotchy and not so even and showed little difference in seed coverage to Thiram 60 alone, although retention on the seeds was poor with the latter.

Retention of the chemical on the seeds was excellent with all three formulations and even at such a high rate of application very little came away on the hands.

Germination Tests

Seed treated with Thiram 60 + 2.5% liquid preparation were tested for germination in a glasshouse. The seed was sown into a mixture of soil and compost. The field beans were sown 50 seeds per tray. The winter barley and wheat were sown 100 seeds per tray.

Germination Results

| Field Beans - Maris Bead | | | | |
|---|---|---|---|---|
| Treatment (10 l./tonne seed) | Days after Sowing | | | |
| | 9 | 10 | 11 | 12 |
| Thiram 60 | 17 + 14 = 31% | 23 + 21 = 44% | 30 + 37 = 67% | 42 + 46 = 88% |
| Thiram 60 + 2.5% liquid preparation | 33 + 24 = 57% | 45 + 38 = 83% | 48 + 44 = 92% | 49 + 46 = 95% |

Seed treated with Thiram 60 + 2.5% liquid preparation of the invention germinated 48 hours earlier than seed treated with Thiram 60 alone.

| Winter Barley - variety unknown | | |
|---|---|---|
| Treatment (10 l./tonne seed) | Days after Sowing | |
| | 9 | 10 |
| Untreated | 96 + 92 = 94% | 97 + 98 = 97.5% |
| Thiram 60 | 79 + 90 = 89.5% | 97 + 100 = 98.5% |
| Thiram 60 + 2.5% liquid preparation. | 93 + 94 = 93.5% | 97 + 97 = 97% |

| Wheat-Australian black seeded variety | | |
|---|---|---|
| Treatment (10 l./tonne seed) | Days after Sowing | |
| | 9 | 10 |
| Untreated | 61 + 77 = 69% | 69 + 81 = 75% |
| Thiram 60 | 81 + 69 = 75% | 81 + 78 = 79.5% |
| Thiram 60 + 2.5% liquid preparation. | 73 + 75 = 74% | 73 + 75 = 74% |

There appear to be no significant differences between treatments for winter barley and wheat, with the poor germination of the wheat due to poor quality seed. It can be concluded that the preparation of the invention does not adversely affect germination.

EXAMPLE II

Attempts were made over a period of 2 years to formulate for use as a fungicide a sulphur sludge residue from ultramine manufacture and containing about 50% free sulphur so that it did not clay 100%, but without success.

A 10 litre drum of the sulphur sludge residue was cut open and the sulphur sludge residue "dug" out.

4

Between 2% and 5%, not measured, of a liquid preparation prepared as in Example 1 was added and the mixture stirred until all the lumps were dispersed and the mixture was all liquid. Nine litres of the liquid mixture were left to stand in a bucket. After 12 weeks there was no sign of claying.

## Claims

1. A preparation for improving particular properties of selected chemical products used in agriculture and horticulture, the preparation being in liquid or powder form and essentially comprising, by weight percent, as a liquid 0.2 to 5.0 of at least one water soluble sucrose ester, 0.1 to 15 of at least one polysaccharide and balance water, or as a powder 2.0 to 25 of at least one water soluble sucrose ester, 2 to 65 of at least one polysaccharide and balance inert filler.

2. A preparation according to claim 1, having as a liquid 0.2 to 4.0% unsaturated sucrose mono ester or as a powder 2 to 20% unsaturated sucrose mono ester.

3. A preparation according to claim 2, having, as a liquid, 0.5 to 2.0% unsaturated sucrose mono ester or as a powder 5 to 12% unsaturated sucrose mono ester.

4. A preparation according to claim 2 or 3, having, as a liquid 0.05 to 1.0% unsaturated sucrose, di-, tri- and/or poly-ester, or, as a powder, 0.5 to 5.0% unsaturated sucrose di-, tri- and/or poly-ester.

5. A preparation according to claim 4, having as a liquid 0.1 to 0.5% unsaturated sucrose di-, tri- and/or poly-ester or as a powder 1.0 to 4.0% unsaturated sucrose di- tri-, and/or poly-ester.

6. A preparation according to any one of claims 1 to 5, wherein said at least one polysaccharide is selected from the group comprising sodium carboxymethyl cellulose, xanthan gum, guar gum and alginate.

7. A preparation according to claim 6, having, as a liquid, 1 to 15% sodium carboxymethyl cellulose and/or alginate or, as a powder, 45 to 60% sodium carboxymethyl cellulose and/or alginate.

8. A preparation according to claim 7, having as a liquid, 3 to 10% sodium carboxymethyl cellulose and/or alginate or, as a powder, 45 to 60% sodium carboxymethyl cellulose and/or alginate.

9. A preparation according to claim 6, having, as a liquid, 0.1 to 3.0% xanthan gum and/or guar gum or, as a powder, 2 to 30% xanthan gum and/or guar gum.

10. A preparation according to claim 9, having, as a liquid, 0.5 to 2.0% xanthan gum or guar gum or, as a powder, 10 to 20% xanthan gum and/or guar gum.

11. A preparation according to any one of the preceding claims in the form of a powder and having lactose as the inert filler.

12. A preparation according to claim 7 or 8, having, as a powder, 25 to 50% lactose as the inert filler.

13. A preparation according to claim 12, having as a powder 30 to 45% lactose.

14. A preparation according to claim 13, consisting of, as a liquid 0.8% unsaturated sucrose mono ester, 0.2% unsaturated di-, tri-, and/or poly- ester, 5% sodium carboxymethyl cellulose and/or alginate and 94% water, or as a powder 8.64% unsaturated sucrose mono ester, 2.16% unsaturated sucrose di, tri-, and/or poly-ester, 54.1% sodium carboxymethyl cellulose and/or alginate and 35.1% lactose.

15. A preparation according to claim 9 or 10, having, as a powder, 55 to 80% lactose as the inert filler.

16. A preparation according to claim 15, having, as a powder, 60 to 70% lactose.

17. A preparation according to claim 9 or 10, consisting of, as a liquid, 0.8% unsaturated sucrose mono ester, 0.2% unsaturated di, tri- and/or poly-ester; 1.5% xanthan gum or guar gum and 97.5% water, or, as a powder. 8.64% unsaturated sucrose mono ester, 2.16% unsaturated sucrose di-, tri- and/or poly-ester, 16.2% xanthan gum or guar gum and 73% lactose as the inert filler.

18. A seed dressing having added thereto to improve the coating properties thereof 0.2 to 50% by weight as a liquid or 0.05 to 35% by weight as a powder of a preparation according to any one of the preceding claims.

19. An agricultural or horticultural chemical preparation having added thereto to prevent or reduce separation, sedimentation or claying of the active ingredients thereof 0.2 to 50% by weight as a liquid or 0.05 to 35% as a powder of a preparation according to any one of claims 1 to 17.

20. A seed dressing or chemical preparation according to claim 18 or 19, having added thereto 1 to 5% as a liquid or 0.1 to 5% as a powder of a preparation according to any one of claims 1 to 16.

5